# FASCICULE DE BREVET EUROPEEN

(11) **EP 4 452 829 B1**
(45) Date de publication et mention de la délivrance du brevet: **26.11.2025**
(21) Numéro de dépôt: 22847597.6
(22) Date de dépôt: 20.12.2022
(51) Int. Cl.: B67D 9/02, G06K 7/14

(54) **SYSTÈME DE CHARGEMENT MARINE À COMMANDE DE DÉPLACEMENT AUTOMATIQUE ET PROCÉDÉ ASSOCIÉ**
SCHIFFSBELADUNGSYSTEM MIT AUTOMATISCHER BEWEGUNGSSTEUERUNG UND ENTSPRECHENDES VERFAHREN
MARINE LOADING SYSTEM WITH AUTOMATIC MOTION CONTROL AND ASSOCIATED METHOD

(30) Priorité: 23.12.2021 FR 2114449
(43) Date de publication de la demande: 30.10.2024
(73) Titulaire: T.EN Loading Systems, 89100 Sens (FR)
(72) Inventeur: PAQUET, Stéphane, 89260 VOISINES (FR); MONTCOURANT, Pascal, 89140 LIXY (FR)
(74) Mandataire: Santarelli
(86) Numéro de dépôt international: PCT/FR2022/052448
(87) Numéro de publication internationale: WO 2023/118737

(56) Documents cités:
- WO-A2-2020/163288
- FR-A1- 2 931 451
- FR-A1- 2 975 368
- US-A1- 2021 214 051

## Description

### Domaine technique de l'invention

La présente invention concerne d'une manière générale un système de chargement marine comportant des bras articulés de transfert d'un fluide d'un emplacement à un autre, ainsi qu'un procédé associé.

On entend par fluide, un produit liquide ou gazeux. Il s'agit plus particulièrement de gaz naturel liquéfié, de gaz naturel basse et haute pression, de produits pétroliers ou chimiques transférés entre un navire et un quai ou entre deux navires.

Plus particulièrement, la présente invention concerne la commande de déplacement automatique d'un tel bras en direction d'une tubulure cible à laquelle il est destiné à être raccordé.

### Etat de la technique

Généralement, un tel bras comporte une tuyauterie articulée, montée sur un support, reliée à une tuyauterie d'alimentation de fluide, et sur lequel est monté un premier tube, dit tube interne, via une portion de tube coudée à 90 degrés permettant à l'une de ses extrémités une rotation selon un axe vertical, et à l'autre extrémité, selon un axe horizontal. A l'extrémité opposée du tube interne, est monté à rotation selon un axe horizontal, un second tube, dit tube externe. A l'extrémité du tube externe est monté un système de couplage.

Le système de couplage possède ainsi au moins 3 degrés de liberté dans l'espace par rapport au support et les mouvements suivant chacun de ces degrés de liberté sont commandés par des actionneurs hydrauliques, électriques ou pneumatiques, tels que des vérins ou des moteurs.

De tels bras sont connus par exemple des demandes de brevet FR 2 975 368 A1, FR2813872, FR2854156, FR2931451, FR2964093 et FR3003855.

Dans le cas d'une procédure de connexion automatique, telle que celle du bras de la demande de brevet FR2931451, le calcul de la trajectoire de déplacement du bras en direction de la tubulure cible comporte le calcul de la position relative du système de couplage par rapport à la tubulure cible en fonction d'information fournies par des moyens de fourniture d'information de position du système de couplage par rapport à une cible.

Selon un mode de réalisation, ces moyens de fourniture d'information comportent une caméra montée sur le système de couplage.

La cible est disposée sur la tubulure cible à une position prédéfinie. La caméra est conçue pour se focaliser sur la cible et fournir à un calculateur une image de la cible. A partir de cette image, le calculateur est adapté à calculer la position relative du système de couplage par rapport à la tubulure cible.

La cible est de préférence pour des raisons de performance, une mire réfléchissante. Il y est également envisagé de prendre pour cible l'extrémité libre de la tubulure cible elle-même.

En pratique, il est mis en œuvre un marqueur fiduciel ou plus en tant que cible. Celui-ci contient un identifiant permettant d'être sûr que c'est effectivement un marqueur. Ensuite le calculateur analyse l'image pour déterminer la position et l'orientation (6 degrés de liberté) du marqueur par rapport à la caméra. Il y a de préférence plusieurs marqueurs pour avoir de la redondance et augmenter la précision. La position de la cible par rapport à la tubulure cible doit donc être connue précisément pour pouvoir calculer la position de la tubulure cible à partir de la mesure de la position de la cible. Il est donc crucial que la cible soit positionnée de façon très précise sur la tubulure cible afin que la procédure de connexion puisse être réalisée correctement.

Cela s'avère d'autant plus critique lorsque la cible est choisie amovible afin de pouvoir être utilisée sur différentes tubulures cibles et doit être mise en place par un opérateur à chaque procédure de connexion.

Par ailleurs, il est nécessaire de prévoir autant de cibles qu'il existe de modèles de tubulures cibles à équiper.

En outre, les systèmes de vision mis en œuvre à ce jour sont sensibles à la luminosité ambiante, aux ombres, à l'éblouissement et aux reflets.

La présente invention a pour but de résoudre au moins l'un des inconvénients précités.

Elle vise plus particulièrement à proposer un système de chargement marine dont la procédure de connexion permet de s'affranchir du positionnement précis de la cible par rapport à la tubulure cible.

### Exposé de l'invention

La présente invention propose, à cet effet un système de chargement marine comportant un bras articulé de transfert de fluide ayant une ligne de transfert de fluide équipée à l'une de ses extrémités correspondant à une extrémité libre, d'un système de couplage adapté à être raccordé à une tubulure cible pour le transfert du fluide, la tubulure cible et une cible placée auprès de la tubulure cible présentant chacune des moyens de repérage conçus pour permettre une détermination de position relative ; des actionneurs pour commander le mouvement du bras dans l'espace ; des moyens optiques portés par le système de couplage et adaptés à transmettre des images des moyens de repérage ; des moyens de commande des actionneurs équipant le bras ; et des moyens de calcul adaptés à calculer une trajectoire de déplacement du bras en direction de la tubulure cible à partir des images des moyens de repérage de la cible et de la tubulure cible, transmis par les moyens optiques, et à générer et transmettre aux moyens de commande des instructions de commande déterminées en fonction de la trajectoire calculée.

La mise en œuvre de moyens de repérage permettant une détermination de position relative, à la fois sur une tubulure cible et une cible, permet de placer cette dernière à proximité de la tubulure cible, sans qu'il soit nécessaire de respecter un positionnement précis.

En effet, les moyens de calcul peuvent grâce à ces moyens de repérage déterminer à la fois la position relative du système de couplage par rapport à la cible et la position relative de ce système de couplage par rapport à la tubulure cible pour en déduire la position relative de la tubulure cible par rapport à la cible.

Ces deux positions étant déterminées par les moyens de calcul, la mise en position précise de la cible par rapport à la tubulure cible n'importe donc pas.

Par ailleurs, une fois la position relative de la tubulure cible par rapport à la cible connue, le calcul de la trajectoire de déplacement pourra se faire sur la base du seul repérage de la cible et ainsi poursuivre la procédure de connexion même en l'absence de tubulure cible dans le champ de vision des moyens optiques.

En outre, grâce à la présente invention, les moyens de repérage ne requièrent pas d'être spécifiques à une tubulure cible et, partant, la cible correspondante peut être utilisée avec n'importe quel type de tubulure cible.

Suivant d'autres dispositions de la présente invention qui pourront avantageusement être mises en œuvre de façon indépendante ou combinée, notamment en raison de leur commodité de fabrication ou d'utilisation :
- les moyens de calcul sont adaptés à générer et transmettre des instructions de commande prédéfinies pour réaliser une première approche du bras en direction de la tubulure cible, selon une trajectoire systématique destinée à permettre aux moyens optiques de détecter la cible et la tubulure cible, optionnellement en étant adaptés à interagir avec un transpondeur disposé sur la cible ;
- pour calculer la trajectoire de déplacement, les moyens de calcul sont adaptés à calculer successivement la position relative du système de couplage par rapport à la cible puis la position relative du système de couplage par rapport à la tubulure cible;
- les moyens de repérage de la cible comprennent un ou plusieurs marqueurs fiduciels ;
- le marqueur fiduciel est un marqueur fiduciel binaire carré conçu pour permettre une détermination de position relative selon 3 degrés de liberté ou une détermination de position relative et d'orientation relative selon 6 degrés de liberté ;
- les moyens de repérage de la tubulure cible comprennent un ou plusieurs marqueurs fiduciels disposés sur une bride de la tubulure cible ou une figure formée par les cercles concentriques limitant extérieurement et intérieurement la face de joint d'une bride de la tubulure cible ;
- l'extrémité libre du bras comporte un marqueur fiduciel agencé pour permettre une vérification de l'étalonnage des moyens optiques ;
- la cible comporte un panneau rétro-réfléchissant sur lequel sont disposés les moyens de repérage de la cible ;
- les moyens optiques comportent une caméra numérique ;
- la caméra numérique est équipée d'un filtre à densité neutre fixe ou d'un filtre à densité neutre variable électronique et/ou d'un filtre polarisant ;
- les moyens optiques sont montés sur l'extrémité libre du bras, sous le système de couplage ;
- le bras est équipé d'au moins un projecteur d'éclairage, optionnellement dimmable, monté sur le bras à côté des moyens optiques ;
- le bras est équipé de deux projecteurs d'éclairage, agencés de part et d'autre des moyens optiques et formant des cônes d'éclairage supérieur et inférieur du champ de vision des moyens optiques.

L'invention concerne également un procédé de commande de déplacement d'au moins un bras articulé de transfert de fluide en direction d'une tubulure cible, pour le raccordement à celle-ci, comportant les étapes de :
- prendre des vues de moyens de repérage présents sur la tubulure cible à laquelle est destinée à être raccordé un système de couplage du bras articulé de transfert de fluide et sur une cible placée auprès de la tubulure cible ;
- calculer la position relative de la cible par rapport à la tubulure cible à partir des images des moyens de repérage de la cible et de la tubulure cible ;
- calculer une trajectoire de déplacement du bras en direction de la tubulure cible à partir des images des moyens de repérage de la cible; et
- générer et transmettre des instructions de commande permettant de commander le déplacement du bras en direction de la tubulure cible.

Suivant d'autres dispositions de ce procédé qui pourront avantageusement être mises en œuvre de façon indépendante ou combinée, notamment en raison de leur commodité de fabrication ou d'utilisation :
- on commande, avant l'étape de prise de vue, le déplacement du bras selon une trajectoire systématique destinée à permettre la détection par les moyens optiques de la cible préalablement positionnée auprès de la tubulure cible ;
- la trajectoire systématique comporte en fin de trajectoire, pour un premier bras de transfert de fluide, un mouvement d'approche essentiellement descendant du système de couplage en direction de la cible associée au premier bras et, pour un deuxième bras, un mouvement d'approche essentiellement latéral en direction d'une cible associée au second bras ;
- on pré-positionne le système de couplage à une hauteur prédéterminée au-dessus de la cible sur la base d'information communiquées par un transpondeur disposé sur la cible.

### Brève description des figures

L'exposé de la présente invention sera maintenant poursuivi par la description détaillée d'exemples de réalisation, donnés ci-après à titre illustratif et non limitatif, en référence aux dessins annexés.

Sur ceux-ci :
- la figure 1 est une vue schématique en perspective d'un bras de transfert de fluide d'un système de chargement marine selon l'invention ;
- la figure 2 est un schéma de principe du fonctionnement des moyens optiques ou des moyens de calculs du système de chargement ;
- la figure 3 est une vue schématique en perspective de la cible de la figure 2 et d'une tubulure cible à laquelle le bras de chargement de la figure 1 est destiné à être raccordé ;
- la figure 4 est une vue schématique en élevation de l'extrémité libre du bras de chargement de la figure 1 ;
- la figure 5 est une vue similaire à la figure 4 et représente les champs de vision des moyens optiques et les cônes d'éclairage des projecteurs d'éclairage montés sur le bras de chargement de la figure 1 ;
- les figures 6A à 6D sont des vues schématiques en élévation illustrant les étapes successives de la procédure de connexion de bras de chargement, tels que celui de la figure 1.

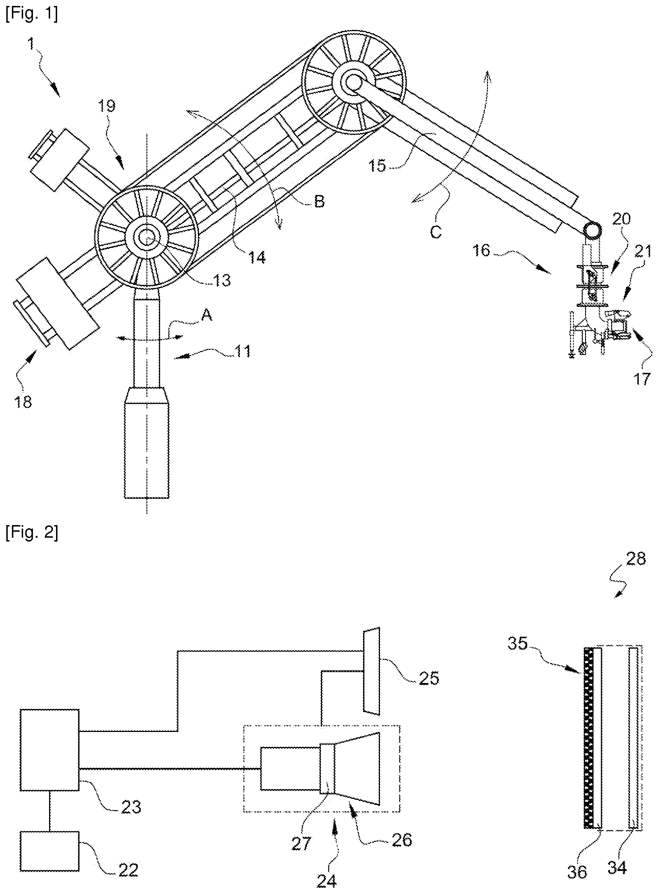

La figure 1 représente de manière très schématique un bras articulé de transfert de fluide d'un système de chargement marine selon l'invention. Le bras articulé de transfert de fluide est ici représenté de manière très simplifiée, et on rappelle à cet égard que l'invention s'adapte à tout système de bras articulé de transfert de fluide, notamment aux bras de transfert de fluide des demandes de brevets mentionnées supra.

D'une manière générale, ce type de bras de chargement est connu en soi, et ne sera donc pas décrit très en détails ici.

Le bras de transfert de fluide de la figure 1 est un bras de chargement marine 1 qui présente une embase 11 logeant un tube relié à une canalisation d'alimentation en fluide qui se trouve en dessous de la surface de la structure sur laquelle l'embase 11 est fixée. Il peut s'agir d'une structure flottante, telle qu'un navire, ou d'un quai. Au sommet de l'embase 11 est articulé à rotation un tube coudé 13, sur lequel s'articule à son tour un premier tube, dit tube interne, 14 sur lequel s'articule à son extrémité opposée un second tube, dit tube externe, 15. L'extrémité libre du tube externe porte un ensemble de couplage 16 permettant aussi le transfert de fluide et dont le système de couplage 17, appelé aussi coupleur, est destiné à être raccordé à une tubulure cible, telle qu'un manifold, disposée par exemple sur un navire, ainsi que cela sera décrit plus en détail ci-après. Dans le mode de réalisation représenté, de manière connue en soi, le coupleur 17 présente également trois degrés de liberté en rotation par rapport à l'extrémité libre du tube externe 15. Ces trois degrés de rotation sont soit libres, de manière à ce qu'un opérateur puisse ajuster librement l'angle du coupleur lors de la phase finale d'approche pour le raccordement de celui-ci à la tubulure cible, soit une ou plusieurs de ces rotations sont commandées par des actionneurs et reliées à un automate, pour un positionnement tout ou partiellement automatique.

Des ensembles formés de raccords ou joints tournants et de coudes sont mis en œuvre ici, pour permettre les rotations. Les joints tournants de ces ensembles sont, ici, tous cryogéniques. Ici, les joints tournants sont au nombre de trois sur la portion tubulaire articulée 14, 15 et trois également sur l'ensemble de couplage 16, dont un est motorisé (le joint médian).

Le bras est aussi équipé, de manière connue en soi, de capteurs angulaires (non représentés sur les figures) permettant de mesurer à chaque instant la position du bras (angle du tube interne 14, angle du tube externe 15, angle de la première rotation après l'embase et angle de la rotation motorisée de l'ensemble de couplage 16, si tel est le cas).

A la portion tubulaire articulée 14, 15 est ici associé à un système d'équilibrage à contrepoids 18, associé ici par ailleurs à un mécanisme du type pantographe d'équilibrage 19.

A l'extrémité de la ligne de transfert équipée de l'ensemble de couplage, il est aussi prévu ici un système de déconnexion d'urgence 20 (ERS en anglais, pour Emergency Release System) et un système de connexion/déconnexion rapide 21 du coupleur 17 (QCDC en anglais pour Quick Connect - Disconnect Coupler).

Trois actionneurs non visibles sur la figure 1 sont prévus pour chacune des trois articulations du bras de chargement (symbolisées par les doubles flèches A, B, C) pour actionner directement ou par l'intermédiaire d'une transmission le tube interne, le tube externe et générer la rotation autour d'un axe vertical.

Les trois actionneurs et ceux qui pilotent les joints tournants de l'ensemble de couplage 16 sont ici des vérins hydrauliques. En variante non illustrée, un ou plusieurs des vérins hydrauliques sont remplacés par d'autres types d'actionneurs hydrauliques, pneumatiques ou électriques : moteurs, vérins ou tout autre type d'actionneur.

Comme représenté sur la figure 2, le système de chargement marine selon l'invention comporte également un automate 22 disposé en pratique dans une armoire électrique de commande.

Il s'agit plus précisément d'un automate programmable industriel (API ou PLC en anglais, pour Programmable Logic Controller). Il est adapté à traiter les signaux reçus d'une unité de traitement d'image 23, au moyen d'algorithmes préprogrammés. En variante, il peut s'agir d'une centrale d'acquisition de données et de calcul, du genre ordinateur industriel, et plus généralement d'un dispositif d'acquisition de données et de calcul, tel qu'un calculateur.

L'unité de traitement d'image 23 fait partie avec l'API 22 de moyens de calcul du système de chargement marine selon l'invention et est relié fonctionnellement à des moyens optiques 24 adaptés à transmettre des images de moyens de repérage décrits plus en détail ci-après.

Cette unité de traitement est également adaptée à commander les moyens optiques 24 et des projecteurs d'éclairage 25, au nombre de deux en pratique.

Elle comporte en particulier un microprocesseur temps réel associé si besoin à un circuit FPGA ("Field Programable Gate Array" en anglais), autrement dit un réseau de portes programmable par l'utilisateur, pour la gestion des opérations les plus chronophages.

Plus précisément, les moyens optiques 24 comportent ici, une caméra numérique 26 équipée d'un filtre à densité neutre variable électronique 27 et les projecteurs d'éclairage sont du type dimmable, et sont donc tous trois commandés par l'unité de traitement.

La caméra numérique 26 est par ailleurs munie d'un filtre polarisant (non visible sur les figures).

Lorsque le système de chargement marine selon l'invention comporte plusieurs bras de chargement, l'API 22 est configurée pour les commander tous et il est soit prévu une unité de traitement d'images 23 commune aux différentes caméras des bras de chargement 1 et logée dans l'armoire électrique de commande avec l'API 22, soit une unité de traitement d'images 23 par caméra, disposée alors au voisinage de la caméra numérique.

De façon connue en soi et non représenté sur les dessins, des pré-actionneurs reliés à une alimentation hydraulique sont prévus pour fournir aux actionneurs l'énergie hydraulique nécessaire à leur fonctionnement. Ils sont commandés par l'automate. Bien entendu, ceci n'est valable que dans le cas où les actionneurs considérés sont de type hydraulique.

Une interface de commande à distance pour un opérateur est par ailleurs prévue dans le cas du présent mode de réalisation. Elle est ici conçue pour lui permettre de donner des instructions de connexion ou de déconnexion au bras au moyen d'un joystick, la trajectoire de déplacement du bras de chargement 1 étant, quant à elle, calculée automatiquement par l'API 22.

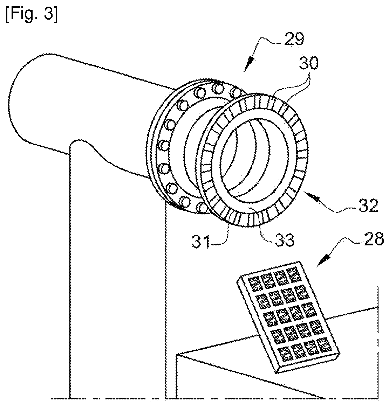

Afin de permettre aux moyens de calcul définis supra de pouvoir calculer la trajectoire de déplacement du bras de chargement 1 en direction de la tubulure cible, et partant, générer et transmettre aux pré-actionneurs des instructions de commande déterminées en fonction de la trajectoire calculée, la caméra numérique 26 vient prendre des vues de moyens de repérage présents, comme illustré sur la figure 3, à la fois sur une cible 28 et la tubulure cible 29 à laquelle le coupleur 17 du bras de chargement 1 est destiné à être raccordé.

Les moyens de repérage mis en œuvre dans le cas du présent mode de réalisation sont des marqueurs fiduciels, tels que des marqueurs fiduciels binaires carrés ou formés d'une association de points et de carrés, connus en soi et déjà utilisés dans le domaine du pétrole et du gaz.

Ceux apposés sur la tubulure cible 29 sont également des marqueurs fiduciels constitués par une figure géométrique formée par une succession de traits radiaux 30 disposés sur le pourtour de l'ouverture circulaire de la tubulure cible 29.

Ils sont en pratique apposés sur une plaque annulaire 31 dimensionnée et apte à être fixée sur une surface de la bride 32 de la tubulure cible 29, qui se trouve en arrière d'une face de joint surélevée 33 de cette bride 30.

. Ces marqueurs permettent de mesurer 6 degrés de liberté (position et orientation). En variante, on peut utiliser des marqueurs fiduciels ne permettant de mesurer que 3 degrés de liberté (position) lorsque l'on est en présence d'applications « terrestres » (« onshore » en anglais)avec peu de mouvements et/ou un navire toujours bien parallèle au quai.

S'agissant de ceux de la tubulure cible 29, ils peuvent en variante être remplacés par une détection des cercles concentriques limitant extérieurement et intérieurement la bride 32 de la tubulure cible 29.

Comme on peut encore le voir sur cette figure 3, la cible 28 est placée à proximité de la tubulure cible 29, sous celle-ci, tel que par exemple sur le pont du navire équipé de la tubulure cible 29.

La cible 28 comporte dans le cas du présent mode de réalisation et comme représenté sur la figure 2 un panneau rétro-réfléchissant 34 sur lequel sont disposés les marqueurs fiduciels 35.

Il s'agit plus précisément de marqueurs fiduciels opaques fixés sur un support translucide 36 pourvu d'un traitement anti-éblouissement et/ou antireflet.

En variante, les marqueurs fiduciels 35 opaques peuvent être apposés directement sur un panneau rétro-réfléchissant avec un traitement anti-éblouissement ou, en lieu et place du panneau réfléchissant, la cible 28 peut être équipée d'éléments rétro-réfléchissant.

Le panneau rétro-réfléchissant 34 permet de renvoyer la lumière en provenance des projecteurs d'éclairage 25, directement à la caméra 26.

Du côté des moyens optiques mis en œuvre pour prendre des vues de ces marqueurs fiduciels, le filtre à densité neutre permet de contrôler la quantité de lumière atteignant les capteurs CCD de la caméra numérique 26 et gérer de manière adéquate les situations d'éclairage trop vif de cette caméra 26.

La puissance et le faisceau des projecteurs d'éclairage 25 sont à cet égard choisis de sorte à fournir un éclairage suffisant de la zone de la cible 28, d'une part pour contrer les effets néfastes de la lumière du soleil, tel que les ombres, les reflets et les éblouissements et, d'autre part, la nuit.

Ces projecteurs d'éclairage 25 sont par ailleurs de type dimmable pour contrôler le niveau d'éclairage en fonction des conditions environnementales (pluies, neige, brouillard, nuit, soleil).

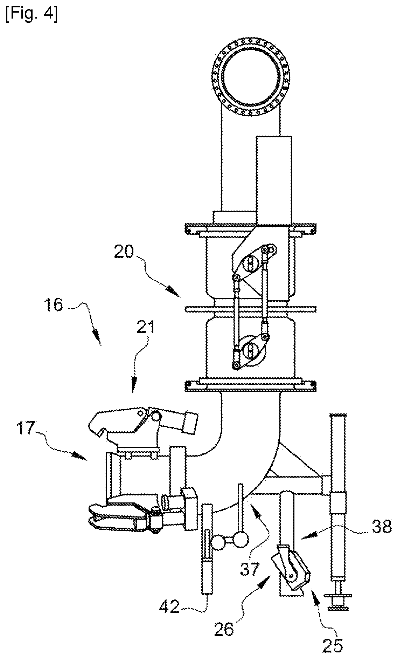

En pratique, comme représenté sur la figure 4, la caméra numérique 26 est montée sur le système de couplage 16 et plus précisément sur l'ensemble joint tournant/coude 37 précédant le coupleur 17, de manière à se trouver sous celui-ci et partant, être aisément accessible pour des raisons de maintenance et de nettoyage.

Le montage est réalisé par l'intermédiaire d'un support de connexion 38 électriquement isolant et la caméra numérique 26 est, quant à elle, logée dans une enceinte antidéflagrante fixée à ce support 38.

La caméra numérique 26 étant placée sous le système de déconnexion d'urgence, des prises auto-éjectables sont mises en œuvre lorsque celle-ci est reliée à l'unité de traitement d'image 23 par des moyens de liaison filaire.

Les projecteurs d'éclairage 25 sont, quant à eux, montés sur le même ensemble 37, en avant de la caméra numérique 26 et de part et d'autre de celle-ci.

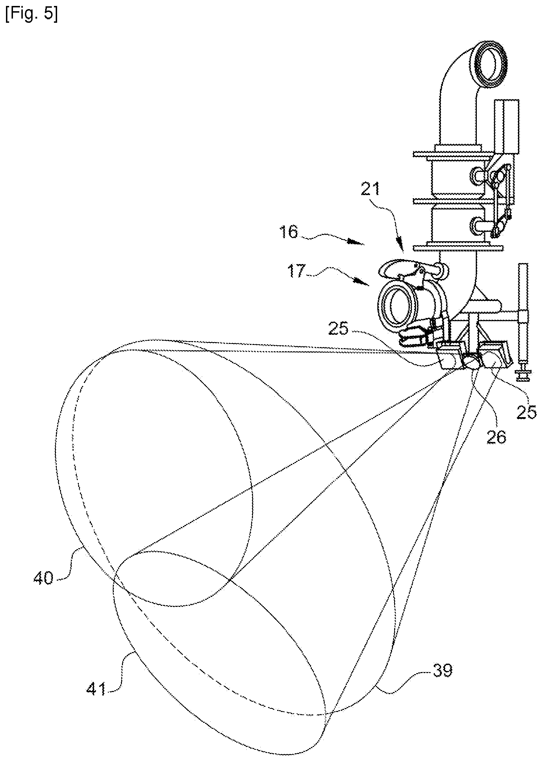

Comme on le voit mieux sur la figure 5, la caméra numérique 26 présente, ici, un angle de champ de vision délimité par le cône 39, tandis que les deux projecteurs d'éclairage 25 forment un cône d'éclairage supérieur 40 et un cône d'éclairage inférieur 41 du champ de vision de la caméra 26.

En pratique, il s'agit de deux projecteurs de 30000 Lumens chacun.

La position de la caméra numérique 26 par rapport au coupleur 17 étant déterminante pour le calcul de la trajectoire de déplacement du bras de chargement 1, et celle-ci pouvant être perturbée par exemple par un choc, il est par ailleurs prévu dans le cadre du présent mode de réalisation, un marqueur fiduciel 42 supplémentaire pour confirmer le bon étalonnage de la caméra et, partant, toujours démarrer une opération de connexion automatique avec l'assurance d'un bon étalonnage.

Ce marqueur 42 est également monté sur l'ensemble 37 mentionné ci-dessus via une attache (non visible sur les figures), de manière à être dans le champ de vision de la caméra 26 mais sans pouvoir interagir avec les marqueurs fiduciels de la cible 28 et de la tubulure cible 29.

On notera encore qu'un détecteur à ultrasons (non visible sur les figures) peut être agencé sur l'extrémité libre du bras de chargement 1 de manière à pouvoir éviter une collision, par exemple avec le pont d'un navire portant la tubulure cible, en cas de défaillance de détection de la cible par les moyens optiques. Celui-ci est relié fonctionnellement aux moyens de calcul.

En pratique, l'automate 22 détermine notamment, grâce aux moyens optiques et aux moyens de repérage, la position relative du coupleur 17 par rapport à la cible 28 et à la tubulure cible 29, et ici aussi leur orientation relative (lacet, roulis, tangage), puis génère une trajectoire de déplacement du coupleur 17 en direction de la tubulure cible 29. Il calcule ensuite les instructions de commande à donner à chacun des actionneurs pour commander le déplacement du coupleur 17 en direction de la tubulure cible 29 depuis la position de stockage du bras.

L'automate 22 peut également envoyer, notamment dans le cadre d'une procédure de connexion automatique complète, une instruction de commande aux préactionneurs pour serrer le coupleur 17 sur la tubulure cible 29, puis une instruction pour débrayer les actionneurs du bras, de manière à rendre libres les mouvements du bras une fois le coupleur 17 raccordé et serré sur la tubulure cible 29.

Pour le retour en position de stockage, la caméra 26 n'est plus nécessaire car le point de départ et le point d'arrivé sont connus. On pilote le bras en utilisant l'information des capteurs angulaires définis ci-dessus.

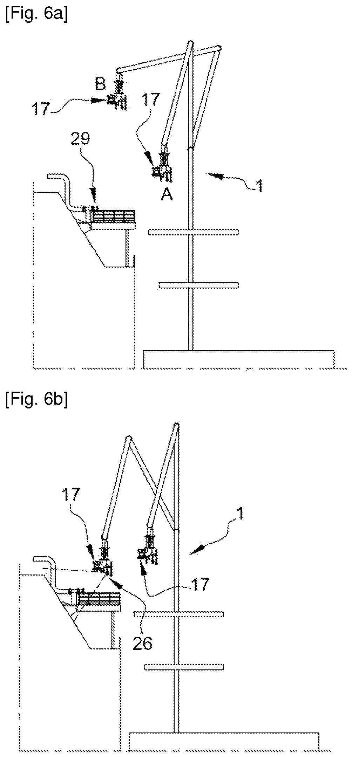

D'une manière plus détaillée, le processus de connexion du bras de chargement 1 à la tubulure cible 29 comporte, dans le cas du présent mode de réalisation de la présente invention, une première étape de génération et transmission d'instructions de commande prédéfinies pour réaliser une première approche du bras de chargement en direction de la tubulure cible 29, selon une trajectoire systématique destinée à permettre à la caméra 26 de détecter la cible 28 puis la tubulure cible 29, voire les deux en même temps, la cible 28 ayant été préalablement positionnée auprès de la tubulure cible 29. Cette étape est représentée sur les figures 6A et 6B, où la trajectoire de déplacement systématique, préprogrammée dans l'automate 22, consiste à amener le coupleur 17 d'une position de stockage A à une position B située au-dessus de la zone où sont situées la cible et la tubulure cible. Ce passage de la position de stockage A à la position B consiste essentiellement, en pratique, à déplacer le coupleur 17 vers le haut et vers l'avant, pour l'amener sensiblement à la verticale de la zone où se trouvent la tubulure cible 29 et la cible 28.

Ensuite, comme illustré par la figure 6B, le coupleur 17 entame un mouvement descendant d'acquisition de la cible 28, avec mise en route de la caméra 26 et des projecteurs d'éclairage 25.

Les capteurs angulaires sont ici aussi utilisés pour le déplacement du bras dans cette phase d'acquisition de la cible.

Une fois les marqueurs de la cible 28 et de la tubulure cible 29 dans le champ de vision de la caméra, l'automate 22 calcule successivement la position relative du coupleur 17 par rapport à la cible 28 et à la tubulure cible 29 et en déduit la position relative de la tubulure cible 29 par rapport à la cible 28. Comme indiqué supra, ces calculs sont ici également complétés par des calculs d'orientation relative.

En pratique, une fois que la cible 28 est détectée, on commande le bras de chargement pour le placer à une position systématique par rapport à la cible 28. C'est dans cette position qu'on réalise alors l'étalonnage, à savoir le calcul de la position de la cible 28 par rapport à la tubulure cible 29.

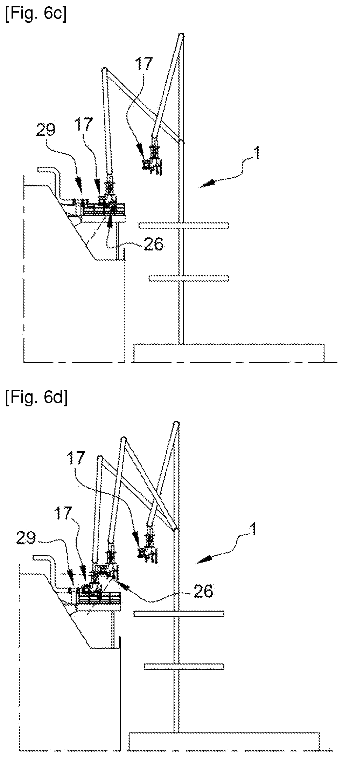

Le mouvement d'approche est ensuite poursuivi afin d'amener le coupleur en face de la tubulure cible (figure 6C). Lorsque le coupleur 17arrive sensiblement à la hauteur de la tubulure cible 29, cette dernière sort du champ de vision de la caméra 26, comme on peut le voir sur la figure 6C. Néanmoins, du fait de calculs mentionnés ci-dessus, l'automate 22 peut poursuivre le mouvement d'approche sur la base de la détection de la seule cible 28.

Les capteurs angulaires peuvent également servir pour ce mouvement d'approche, si l'on souhaite piloter le bras pour un déplacement direct, rectiligne du coupleur 17, tel que décrit par exemple dans la demande de brevet FR2931451.

Enfin, une fois le coupleur 17 en face de la tubulure cible 29, la connexion entre les deux est effectuée de façon automatique, comme mentionné supra.

Lorsque le système de chargement est du type à plusieurs bras mettant en œuvre une ligne de retour vapeur et plusieurs lignes de transfert de liquide, le processus de connexion de la ligne de retour vapeur est réalisé en premier sur la base de la procédure qui vient d'être décrite. En l'absence de ligne de retour vapeur, cette procédure s'applique au premier bras de la série. Ensuite, le raccordement des lignes de transfert de liquide, tel que du gaz naturel liquéfié, est réalisé par une première approche systématique plus directe que la précédente vers la tubulure cible 29 grâce aux informations de position en hauteur des tubulures cibles, acquises lors de la première connexion (cf. les deux positions avant connexion de la figure 6D).

En pratique, cette première approche amène le coupleur 17 juste au-dessus et à côté de la tubulure cible 29, puis applique un mouvement d'approche latéral d'acquisition d'une cible associée à ce second bras. Ensuite, la procédure de connexion se poursuit d'une manière similaire à la précédente.

En fait, le premier bras connecté est le bras qui sert de référence pour l'amarrage du bateau. Le bateau est amarré de tel sorte que la tubulure cible 29 est en face du bras. Donc un mouvement de descente du bras permet de détecter la cible. Pour le bras suivant (et les autres), la tubulure cible 29 n'est pas forcement en face. En revanche son élévation est connue (via le premier bras connecté). Donc la détection de la cible 29 est faite selon un déplacement latéral à l'élévation fournie via le premier bras connecté.

Par ailleurs, chaque bras étant équipé de capteurs, on peut connaître à chaque instant sa position et ainsi éviter des trajectoires conduisant à des collisions (« clashes » en anglais) entre bras.

L'on part bien entendu ici de l'hypothèse que les tubulures cibles du navire auxquelles l'on vient raccorder les bras sont disposées sensiblement à la même hauteur par rapport au pont du navire.

Dans la négative, ou en variante pour accélérer le processus de connexion, l'automate 22 peut venir pré-positionner le coupleur 17 à une hauteur prédéterminée au-dessus de la cible 28 sur la base d'informations communiquées par un transpondeur disposé sur cette cible. Grâce à ces dispositions, le coupleur 17 peut être amené directement à une position d'acquisition de la cible 28, moins élevée que la position B de la figure 6B.

De nombreuses autres variantes sont possibles en fonction des circonstances et l'on rappelle à cet égard que la présente invention ne se limite pas aux exemples représentés décrits.

Par exemple, le bras de chargement peut comporter une ou plusieurs lignes de transfert à deux ou plus de deux tronçons reliés les uns aux autres par les articulations étanches définies supra.

On rappellera par ailleurs, que le dispositif de commande selon l'invention s'adapte sur tous les bras articulés de chargement, et que l'adaptation du dispositif de commande selon l'invention sur tout autre type de système de chargement est à la portée de l'homme de métier.

## Revendications

1. Système de chargement marine comportant un bras articulé de transfert de fluide (1) ayant une ligne de transfert de fluide équipée à l'une de ses extrémités correspondant à une extrémité libre, d'un système de couplage (16) adapté à être raccordé à une tubulure cible (29) pour le transfert du fluide, la tubulure cible (29) et une cible (28) placée auprès de la tubulure cible présentant des moyens de repérage (30) conçus pour permettre une détermination de position relative ; des actionneurs pour commander le mouvement du bras dans l'espace ; des moyens optiques (24) portés par le système de couplage et adaptés à transmettre des images des moyens de repérage ; des moyens de commande des actionneurs équipant le bras ; et des moyens de calcul (22, 23) adaptés à calculer une trajectoire de déplacement du bras en direction de la tubulure cible (29) à partir des images des moyens de repérage de la cible (28), transmis par les moyens optiques (24), et à générer et transmettre aux moyens de commande des instructions de commande déterminées en fonction de la trajectoire calculée. ; **caractérisé en ce que**
la tubulure cible (29) présente des moyens de repérage (35) conçus pour permettre une détermination de position relative ; et **en ce que** lesdits moyens de calcul (22, 23) sont adaptés à calculer une trajectoire de déplacement du bras en direction de la tubulure cible (29) à partir des images des moyens de repérage (35) de la tubulure cible (29), transmis par lesdits moyens optiques (24).

2. Système selon la revendication 1, dans lequel les moyens de calcul sont adaptés à générer et transmettre des instructions de commande prédéfinies pour réaliser une première approche du bras en direction de la tubulure cible selon une trajectoire systématique destinée à permettre aux moyens optiques de détecter la cible et la tubulure cible, optionnellement en étant adaptés à interagir avec un transpondeur disposé sur la cible.

3. Système selon la revendication 1 ou 2, dans lequel, pour calculer la trajectoire de déplacement, les moyens de calcul sont adaptés à calculer successivement la position relative du système de couplage par rapport à la cible puis la position relative du système de couplage par rapport à la tubulure cible.

4. Système selon l'une quelconque des revendications 1 à 3, dans lequel les moyens de repérage de la cible comprennent un ou plusieurs marqueurs fiduciels.

5. Système selon l'une quelconque des revendications 1 à 4, dans lequel les moyens de repérage de la tubulure cible comprennent un ou plusieurs marqueurs fiduciels disposés sur une bride de la tubulure cible ou une figure formée par les cercles concentriques limitant extérieurement et intérieurement la face de joint d'une bride de la tubulure cible.

6. Système selon l'une quelconque des revendications 1 à 5, dans lequel l'extrémité libre du bras comporte un marqueur fiduciel agencé pour permettre une vérification de l'étalonnage des moyens optiques.

7. Système selon l'une des revendications 4 à 6, dans lequel le marqueur fiduciel est un marqueur fiduciel binaire carré conçu pour permettre une détermination de position relative selon 3 degrés de liberté ou une détermination de position relative et d'orientation relative selon 6 degrés de liberté.

8. Système selon l'une quelconque des revendications 1 à 7, dans lequel la cible comporte un panneau rétro-réfléchissant (34) sur lequel sont disposés les moyens de repérage de la cible.

9. Système selon l'une quelconque des revendications 1 à 8, dans lequel les moyens optiques comportent une caméra numérique (26).

10. Système selon la revendication 9, dans lequel la caméra numérique est équipée d'un filtre à densité neutre fixe ou d'un filtre à densité neutre variable électronique et/ou d'un filtre polarisant.

11. Système selon l'une quelconque des revendications 1 à 10, dans lequel les moyens optiques sont montés sur l'extrémité libre du bras, sous le système de couplage.

12. Système selon l'une quelconque des revendications 1 à 11, dans lequel le bras est équipé d'au moins un projecteur d'éclairage (25), optionnellement dimmable, monté sur le bras à côté des moyens optiques.

13. Système selon la revendication 12, dans lequel le bras est équipé de deux projecteurs d'éclairage, agencés de part et d'autre des moyens optiques et formant des cônes d'éclairage supérieur et inférieur du champ de vision des moyens optiques.

14. Procédé de commande de déplacement d'au moins un bras articulé de transfert de fluide en direction d'une tubulure cible, pour le raccordement à celle-ci, comportant les étapes de :
- prendre des vues de moyens de repérage présents sur la tubulure cible à laquelle est destinée à être raccordé un système de couplage du bras articulé de transfert de fluide et sur une cible placée auprès de la tubulure cible ;
- calculer la position relative de la cible par rapport à la tubulure cible à partir des images des moyens de repérage de la cible et de la tubulure cible ; - calculer une trajectoire de déplacement du bras en direction de la tubulure cible à partir des images des moyens de repérage de la cible ; et
- générer et transmettre des instructions de commande permettant de commander le déplacement du bras en direction de la tubulure cible.

15. Procédé selon la revendication 14, qui comporte une étape de commande, avant l'étape de prise de vue, de déplacement du bras selon une trajectoire systématique destinée à permettre la détection par les moyens optiques de la cible préalablement positionnée auprès de la tubulure cible.

16. Procédé selon la revendication 15, selon lequel la trajectoire systématique comporte en fin de trajectoire, pour un premier bras de transfert de fluide, un mouvement d'approche essentiellement descendant du système de couplage en direction de la cible associée au premier bras et, pour un deuxième bras, un mouvement d'approche essentiellement latéral en direction d'une cible associée au second bras.

17. Procédé selon l'une quelconque des revendications 14 à 16, selon lequel on pré-positionne le système de couplage à une hauteur prédéterminée au-dessus de la cible sur la base d'information communiquées par un transpondeur disposé sur la cible.

## Patentansprüche

1. Schiffsladesystem, das einen gelenkigen Fluidübertragungsarm (1) beinhaltet, der eine Fluidübertragungsleitung aufweist, die an einem ihrer Enden, das einem freien Ende entspricht, mit einem Kopplungssystem (16) ausgerüstet ist, das angepasst ist, um an einen Zielstutzen (29) zur Fluidübertragung angeschlossen zu werden, wobei der Zielstutzen (29) und ein Ziel (28), das beim Zielstutzen platziert ist, Ortungsmittel (30) aufweist, die gestaltet sind, um eine relative Positionsbestimmung zu ermöglichen; Stellglieder zum Steuern der Bewegung des Armes im Raum; optische Mittel (24), die vom Kopplungssystem getragen werden und angepasst sind, um Bilder der Ortungsmittel zu übertragen; Steuermittel für die Stellglieder, die den Arm ausrüsten; und Berechnungsmittel (22, 23), die angepasst sind, um aus den von den optischen Mitteln (24) übertragenen Bildern der Ortungsmittel des Ziels (28) eine Bewegungsbahn des Armes in Richtung des Zielstutzens (29) zu berechnen und in Abhängigkeit von der berechneten Bahn bestimmte Steueranweisungen zu erzeugen und an die Steuermittel zu übertragen; **dadurch gekennzeichnet, dass** der Zielstutzen (29) Ortungsmittel (35) aufweist, die gestaltet sind, um eine relative Positionsbestimmung zu ermöglichen; und dadurch, dass die Berechnungsmittel (22, 23) angepasst sind, um aus den von den optischen Mitteln (24) übertragenen Bildern der Ortungsmittel (35) des Zielstutzens (29) eine Bewegungsbahn des Armes in Richtung des Zielstutzens (29) zu berechnen.

2. System nach Anspruch 1, wobei die Berechnungsmittel angepasst sind, um vordefinierte Steueranweisungen zu erzeugen und zu übertragen, um eine erste Annäherung des Armes in Richtung des Zielstutzens entlang einer systematischen Bahn durchzuführen, die dazu bestimmt ist, es den optischen Mitteln zu ermöglichen, das Ziel und den Zielstutzen zu erkennen, indem sie optional angepasst sind, um mit einem am Ziel angeordneten Transponder zusammenzuwirken.

3. System nach Anspruch 1 oder 2, wobei die Berechnungsmittel zum Berechnen der Bewegungsbahn angepasst sind, um nacheinander die relative Position des Kopplungssystems in Bezug auf das Ziel und danach die relative Position des Kopplungssystems in Bezug auf den Zielstutzen zu berechnen.

4. System nach einem der Ansprüche 1 bis 3, wobei die Ortungsmittel des Ziels eine oder mehrere Referenzmarkierungen umfassen.

5. System nach einem der Ansprüche 1 bis 4, wobei die Ortungsmittel des Zielstutzens einen oder mehrere an einem Flansch des Zielstutzens angeordnete Referenzmarkierungen oder eine Figur umfassen, die von den konzentrischen Kreisen gebildet wird, die außen und innen die Dichtfläche eines Flansches des Zielstutzens begrenzen.

6. System nach einem der Ansprüche 1 bis 5, wobei das freie Ende des Armes eine Referenzmarkierung beinhaltet, die angeordnet ist, um eine Überprüfung der Kalibrierung der optischen Mittel zu ermöglichen.

7. System nach einem der Ansprüche 4 bis 6, wobei die Referenzmarkierung eine quadratische binäre Referenzmarkierung ist, die gestaltet ist, um eine relative Positionsbestimmung nach 3 Freiheitsgraden oder eine relative Positions- und Ausrichtungsbestimmung nach 6 Freiheitsgraden zu ermöglichen.

8. System nach einem der Ansprüche 1 bis 7, wobei das Ziel ein retroreflektierendes Schild (34) beinhaltet, an dem die Ortungsmittel des Ziels angeordnet sind.

9. System nach einem der Ansprüche 1 bis 8, wobei die optischen Mittel eine Digitalkamera (26) aufweisen.

10. System nach Anspruch 9, wobei die Digitalkamera mit einem festen Neutraldichtefilter oder einem elektronischen Filter mit variabler Neutraldichte und/oder einem Polarisationsfilter ausgestattet ist.

11. System nach einem der Ansprüche 1 bis 10, wobei die optischen Mittel an dem freien Ende des Arms unter dem Kupplungssystem montiert sind.

12. System nach einem der Ansprüche 1 bis 11, wobei der Arm mit mindestens einem Beleuchtungsprojektor (25), optional dimmbar, ausgestattet ist, der an dem Arm neben den optischen Mitteln montiert ist.

13. System nach Anspruch 12, wobei der Arm mit zwei Beleuchtungsprojektoren ausgestattet ist, die auf beiden Seiten der optischen Mittel angeordnet sind und obere und untere Beleuchtungskegel des Sichtfelds der optischen Mittel bilden.

14. Verfahren zur Bewegungssteuerung mindestens eines gelenkigen Fluidübertragungsarmes in Richtung eines Zielstutzens, zum Anschluss daran, das die Schritte beinhaltet zum:
- Aufnehmen von Ansichten von Ortungsmitteln, die auf dem Zielstutzen, an den ein Kopplungssystem des gelenkigen Fluidübertragungsarmes dazu bestimmt ist, angeschlossen zu werden, und auf einem Ziel vorhanden sind, das beim Zielstutzen platziert ist;
- Berechnen der relativen Position des Ziels in Bezug auf den Zielstutzen aus den Bildern der Ortungsmittel des Ziels und des Zielstutzens; - Berechnen einer Bewegungsbahn des Armes in Richtung des Zielstutzens aus den Bildern der Ortungsmittel des Ziels; und
- Erzeugen und Übertragen der Steueranweisungen, die es ermöglichen, die Bewegung des Armes in Richtung des Zielstutzens zu steuern.

15. Verfahren nach Anspruch 14, das vor dem Schritt des Aufnehmens einen Schritt zum Steuern der Bewegung des Arms entlang einer systematischen Bahn beinhaltet, die dazu bestimmt ist, die Erkennung des zuvor beim Zielstutzen positionierten Ziels durch die optischen Mittel zu ermöglichen.

16. Verfahren nach Anspruch 15, wobei die systematische Bahn am Ende der Bahn für einen ersten Fluidübertragungsarm eine im Wesentlichen absteigende Annäherungsbewegung des Kopplungssystems in Richtung des dem ersten Arm zugeordneten Ziels und für einen zweiten Arm eine im Wesentlichen seitliche Annäherungsbewegung in Richtung eines dem zweiten Arm zugeordneten Ziels beinhaltet.

17. Verfahren nach einem der Ansprüche 14 bis 16, wobei das Kopplungssystem auf einer vorbestimmten Höhe über dem Ziel auf der Grundlage von Informationen, die von einem am Ziel angeordneten Transponder kommuniziert werden, vorpositioniert wird.

## Claims

1. A marine loading system including an articulated fluid transfer arm (1) having a fluid transfer line equipped at one of its ends corresponding to a free end, with a coupling system (16) suitable for being connected to a target manifold (29) for transferring the fluid, the target manifold (29) and a target (28) placed near the target manifold having tracking means (30) designed to enable relative position determination; actuators for controlling movement of the arm in space; optical means (24) carried by the coupling system and suitable for transmitting images of the tracking means; control means for the actuators equipping the arm; and calculation means (22, 23) adapted to calculate a movement trajectory of the arm towards the target manifold (29) from the images of the means of tracking the target (28), transmitted by the optical means (24), and to generate and transmit to the control means control instructions determined according to the calculated trajectory; **characterised in that** the target manifold (29) has tracking means (35) designed to enable relative position determination; and **in that** said calculation means (22, 23) are adapted to calculate a movement trajectory of the arm towards the target manifold (29) from the images of the tracking means (35) of the target manifold (29), transmitted by said optical means (24).

2. The system according to claim 1, wherein the calculation means are suitable for generating and transmitting predefined control instructions in order to achieve a first approach of the arm towards the target manifold along a systematic trajectory for enabling the optical means to detect the target and the target manifold, optionally by being suitable for interacting with a transponder disposed on the target.

3. The system according to claim 1 or 2, wherein, in order to calculate the movement trajectory, the calculation means are suitable for successively calculating the relative position of the coupling system with respect to the target, then the relative position of the coupling system with respect to the target manifold.

4. The system according to any one of claims 1 to 3, wherein the tracking means of the target comprise one or more fiducial markers.

5. The system according to any one of claims 1 to 4, wherein the tracking means of the target manifold comprise one or more fiducial markers disposed on a flange of the target manifold or a figure formed by concentric circles externally and internally limiting the joint face of a flange of the target manifold.

6. The system according to any one of claims 1 to 5, wherein the free end of the arm includes a fiducial marker arranged to enable verification of the calibration of the optical means.

7. The system according to one of claims 4 to 6, wherein the fiducial marker is a binary square fiducial marker designed to enable relative position determination with 3 degrees of freedom or relative position and relative orientation determination with 6 degrees of freedom.

8. The system according to any one of claims 1 to 7, wherein the target includes a retroreflective panel (34) on which the tracking means of the target are disposed.

9. The system according to any one of claims 1 to 8, wherein the optical means include a digital camera (26).

10. The system according to claim 9, wherein the digital camera is equipped with a fixed neutral density filter or an electronic variable neutral density filter and/or a polarising filter.

11. The system according to any one of claims 1 to 10, wherein the optical means are mounted to the free end of the arm, under the coupling system.

12. The system according to any one of claims 1 to 11, wherein the arm is equipped with at least one, optionally dimmable, lighting projector (25), mounted to the arm beside the optical means.

13. The system according to claim 12, wherein the arm is equipped with two lighting projectors, arranged on either side of the optical means and forming upper and lower lighting cones of the field of view of the optical means.

14. A method for controlling movement of at least one articulated fluid transfer arm towards a target manifold, for connection thereto, including the steps of:
- taking views of tracking means present on the target manifold to which a coupling system of the articulated fluid transfer arm is to be connected and on a target placed near the target manifold;
- calculating the relative position of the target with respect to the target manifold from the images of the target and target manifold tracking means; - calculating a movement trajectory of the arm towards the target manifold from the images from the target tracking means; and
- generating and transmitting control instructions for controlling movement of the arm towards the target manifold.

15. The method according to claim 14, which includes a step of controlling, before the view taking step, movement of the arm along a systematic trajectory for enabling detection, by the optical means, of the target previously positioned near the target manifold.

16. The method according to claim 15, wherein the systematic trajectory comprises at the end of the trajectory, for a first fluid transfer arm, an approach movement substantially descending from the coupling system towards the target associated with the first arm and, for a second arm, a substantially lateral approach movement towards a target associated with the second arm.

17. The method according to any one of claims 14 to 16, wherein the coupling system is pre-positioned at a predetermined height above the target on the basis of information communicated by a transponder disposed on the target.
